# EUROPEAN PATENT APPLICATION

(11) **EP 4 831 876 A1**
(43) Date of publication of application: **28.10.2026**
(21) Application number: 25738453.7
(22) Date of filing: 08.01.2025
(51) Int. Cl.: G06N 3/09

(54) **DATA PROCESSING METHOD AND RELATED DEVICE**

(30) Priority: 12.01.2024 CN 202410051824
(71) Applicant: Huawei Technologies Co., Ltd., Shenzhen, Guangdong 518129 (CN)
(72) Inventor: ZHONG, Wanjun, Shenzhen, Guangdong 518129 (CN); WANG, Yufei, Shenzhen, Guangdong 518129 (CN); MI, Fei, Shenzhen, Guangdong 518129 (CN); HUANG, Wenyong, Shenzhen, Guangdong 518129 (CN); SHANG, Lifeng, Shenzhen, Guangdong 518129 (CN); LIU, Qun, Shenzhen, Guangdong 518129 (CN)
(74) Representative: Grünecker Patent- und Rechtsanwälte PartG mbB
(86) International application number: PCT/CN2025/071258
(87) International publication number: WO 2025/148924

(57) **Abstract**

Embodiments of this application provide a data processing method and a related device. The method includes: step 1: obtaining first request information; step 2: obtaining, based on a first agent, first response information corresponding to the first request information; step 3: obtaining evaluation information of the first response information based on a second agent; step 4: optimizing the first response information based on the first agent and the evaluation information to obtain second response information; and step 5: training a neural network based on the first request information and the second response information. To be specific, the first agent may perform optimization based on the evaluation information provided by the second agent for the first response information, and train the neural network by using information in an optimization process, thereby improving an inference effect of the neural network. Alternatively, it is understood that evolution of the neural network can be sustained through interaction between the first agent and the second agent without relying fully on human supervision.

## Description

This application claims priority to Chinese Patent Application No. 202410051824.5, filed with the China National Intellectual Property Administration on January 12, 2024 and entitled "DATA PROCESSING METHOD AND RELATED DEVICE", which is incorporated herein by reference in its entirety.

### TECHNICAL FIELD

Embodiments of this application relate to the field of artificial intelligence, and in particular, to a data processing method and a related device.

### BACKGROUND

Artificial intelligence (artificial intelligence, AI) is a theory, a method, a technology, and an application system in which human intelligence is simulated, extended, and expands by using a digital computer or a machine controlled by a digital computer, to perceive an environment, obtain knowledge, and achieve an optimal result by using the knowledge. In other words, artificial intelligence is a branch of computer science, and is intended to understand essence of intelligence and produce a new intelligent machine that can react in a manner similar to human intelligence. Artificial intelligence is to study design principles and implementation methods of various intelligent machines, so that the machines have perception, inference, and decision-making functions. Research in the field of artificial intelligence includes robotics, natural language processing, computer vision, decision-making and inference, human-machine interaction, recommendation and search, AI basic theories, and the like.

At present, supervised fine-tuning (Supervised Fine-Tuning, SFT) is a common and effective strategy in a training practice of a large language model. The SFT starts with pre-training a complex model, such as GPT, on a massive unlabeled dataset, with a primary objective of enabling the model to predict the next word in a text. Next, for a specific task, a corresponding labeled dataset is collected or prepared. For example, a text set with a category label is used in a text classification task. The labeled data is then used to fine-tune the pre-trained model, adjust a model weight, and possibly uses different optimizers and learning rate settings to adapt to a new task requirement. Finally, the performance of the model is evaluated on an independent test set to ensure that the model not only performs well on training data, but also can effectively generalize to unknown data.

However, although an SFT method is simple and efficient, it relies heavily on manually labeled data. This dependency means that continuous evolution and improvement of the model are often constrained by an amount of available labeled data, which typically requires a substantial investment of manpower and resources.

### SUMMARY

Embodiments of this application provide a data processing method and a related device, which can sustain evolution of neural networks through interaction between a first agent and a second agent without relying fully on human supervision.

A first aspect of this application provides a data processing method. The method is performed by a data processing device, or the method is performed by some components (for example, a processor, a chip, or a chip system) in the data processing device, or the method may be implemented by a logic module or software capable of implementing all or some functions of the data processing device. In the first aspect and a possible implementation thereof, an example in which the method is performed by the data processing device is used for description. The method includes: step 1: obtaining first request information; step 2: obtaining, based on a first agent, first response information corresponding to the first request information; step 3: obtaining evaluation information of the first response information based on a second agent; step 4: optimizing the first response information based on the first agent and the evaluation information to obtain second response information; and step 5: training a neural network based on the first request information and the second response information.

In this embodiment of this application, a first request is answered based on the first agent to obtain the first response information, and the first response information is evaluated based on the second agent. To be specific, the first agent may perform optimization based on the evaluation information provided by the second agent for the first response information, and train the neural network by using information in an optimization process, thereby improving an inference effect of the neural network. Alternatively, it is understood that evolution of the neural network can be sustained through interaction between the first agent and the second agent without relying fully on human supervision.

Optionally, in a possible implementation of the first aspect, the method further includes: step 6: obtaining, based on the second agent, a plurality of pieces of second request information corresponding to the first request information, similarity between each piece of second request information in the plurality of pieces of second request information and the first request information being greater than or equal to a first preset threshold; and step 7: repeating step 2 to step 6 by using each piece of second request information as the first request information until a preset condition is met, the preset condition including at least one of the following: a quantity of times of repetition meets a second preset threshold, a quantity of pieces of request information meets a third preset threshold, and evaluation information obtained after the repetition meets a preset requirement.

In this possible implementation, on one hand, the second agent may provide a plurality of similar requests, and use the similar requests as the first request information to repeat step 2 to step 6, which may be similar to a process of "drawing inferences from one instance" in a human learning and thinking process. In addition, through interaction between the first agent and the second agent, comprehensive and high-quality training data may be constructed from a horizontal (generalization to increase robustness) dimension in combination with a self-improvement approach, for training the neural network. Furthermore, an optimized neural network may generate higher-quality data to implement iterative evolution.

Optionally, in a possible implementation of the first aspect, the method further includes: step 8: obtaining, based on the second agent and a first preset instruction, a plurality of pieces of third request information corresponding to the plurality of pieces of second request information, the first preset instruction being used to improve complexity of each piece of second request information; and step 9: repeating step 7 by using each piece of third request information as each piece of second request information.

In this possible implementation, on one hand, the second agent may provide a plurality of similar requests and a complex request, and use the complex request as the first request information to repeat step 7, which may be similar to processes of "drawing inferences from one instance" and "deliberate learning" in a human learning and thinking process. In addition, through interaction between the first agent and the second agent, comprehensive and high-quality training data may be constructed from a horizontal (generalization to increase robustness) and vertical (progressively learning the complex request) dimensions in combination with a self-improvement approach, for training the neural network. Furthermore, an optimized neural network may generate higher-quality data to implement iterative evolution.

Optionally, in a possible implementation of the first aspect, the method further includes: step 10: obtaining, based on the second agent and a second preset instruction, fourth request information corresponding to the first request information, the second preset instruction being used to improve complexity of the first request information; and step 11: performing step 2 to step 5 and step 10 by using the fourth request information as the first request information until a preset condition is met, the preset condition including at least one of the following: a quantity of times of repetition meets a second preset threshold, a quantity of pieces of request information meets a third preset threshold, and evaluation information obtained after the repetition meets a preset requirement.

In this possible implementation, on one hand, the second agent may provide a complex request, and use the complex request as the first request information to repeat step 2 to step 5 and step 10, which may be similar to a process of "deliberate learning" in a human learning and thinking process. In addition, through interaction between the first agent and the second agent, comprehensive and high-quality training data may be constructed from a vertical (progressively learning the complex request) dimension in combination with a self-improvement approach, for training the neural network. Furthermore, an optimized neural network may generate higher-quality data to implement iterative evolution.

Optionally, in a possible implementation of the first aspect, the foregoing step of training the neural network based on the first request information and the second response information includes: training the neural network based on the first request information, the second response information, and the evaluation information.

In this possible implementation, the evaluation information may be further used as a part of the training data, thereby improving a dimension of the training data and improving a processing capability of the neural network. This process can then be performed continuously and interactively, so that the neural network can evolve continuously and interactively.

Optionally, in a possible implementation of the first aspect, the first agent, the second agent, and the neural network are a same neural network or different neural networks.

In this possible implementation, comprehensive and high-quality training data may be constructed in combination with a self-improvement approach, for use in self-training. In addition, an optimized neural network may generate higher-quality data to implement iterative evolution.

Optionally, in a possible implementation of the first aspect, the first agent, the second agent, and the neural network are located in a same compute device or different compute devices.

In this possible implementation, the data processing method may be applied to one or more device scenarios, such as a cloud-terminal interaction scenario, or a pure terminal-side scenario. This can improve diversity of application scenarios to which the solution is applicable.

A second aspect of this application provides a data processing device. The apparatus is a data processing device, or the apparatus is some components (for example, a processor, a chip, or a chip system) in the data processing device, or the apparatus is a logic module or software capable of implementing all or some functions of the data processing device. The data processing device includes a transceiver unit and a processing unit. The transceiver unit is configured to perform step 1: obtaining first request information; the processing unit is configured to perform step 2: obtaining, based on a first agent, first response information corresponding to the first request information; the processing unit is further configured to perform step 3: obtaining evaluation information of the first response information based on a second agent; the processing unit is further configured to perform step 4: optimizing the first response information based on the first agent and the evaluation information to obtain second response information; and the processing unit is further configured to perform step 5: training a neural network based on the first request information and the second response information.

Optionally, in a possible implementation of the second aspect, the processing unit is further configured to perform step 6: obtaining, based on the second agent, a plurality of pieces of second request information corresponding to the first request information, similarity between each piece of second request information in the plurality of pieces of second request information and the first request information being greater than or equal to a first preset threshold; and the processing unit is further configured to perform step 7: repeating step 2 to step 6 by using each piece of second request information as the first request information until a preset condition is met, the preset condition including at least one of the following: a quantity of times of repetition meets a second preset threshold, a quantity of pieces of request information meets a third preset threshold, and evaluation information obtained after the repetition meets a preset requirement.

Optionally, in a possible implementation of the second aspect, the processing unit is further configured to perform step 8: obtaining, based on the second agent and a first preset instruction, a plurality of pieces of third request information corresponding to the plurality of pieces of second request information, the first preset instruction being used to improve complexity of each piece of second request information; and the processing unit is further configured to perform step 9: repeating step 7 by using each piece of third request information as each piece of second request information.

Optionally, in a possible implementation of the second aspect, the processing unit is further configured to perform step 10: obtaining, based on the second agent and a second preset instruction, fourth request information corresponding to the first request information, the second preset instruction being used to improve complexity of the first request information; and the processing unit is further configured to perform step 11: performing step 2 to step 5 and step 10 by using the fourth request information as the first request information until a preset condition is met, the preset condition including at least one of the following: a quantity of times of repetition meets a second preset threshold, a quantity of pieces of request information meets a third preset threshold, and evaluation information obtained after the repetition meets a preset requirement.

Optionally, in a possible implementation of the second aspect, the processing unit is specifically configured to train the neural network based on the first request information, the second response information, and the evaluation information.

Optionally, in a possible implementation of the second aspect, the first agent, the second agent, and the neural network are a same neural network or different neural networks.

Optionally, in a possible implementation of the second aspect, the data processing device includes the first agent, the second agent, and the neural network.

A third aspect of this application provides a data processing device, including at least one processor. The at least one processor is coupled to a memory. The memory is configured to store a program or instructions. The at least one processor is configured to execute the program or the instructions, so that the apparatus implements the method in any one of the possible implementations of the first aspect.

A fourth aspect of this application provides a data processing device, including at least one processor. The at least one processor is coupled to a memory. The memory is configured to store a program or instructions. The at least one processor is configured to execute the program or the instructions, so that the apparatus implements the method in any one of the possible implementations of the second aspect.

A fifth aspect of this application provides a data processing device, including at least one logic circuit and an input/output interface. The logic circuit is configured to perform the method according to any one of the possible implementations of the first aspect.

A sixth aspect of this application provides a data processing device, including at least one logic circuit and an input/output interface. The logic circuit is configured to perform the method according to any one of the possible implementations of the second aspect.

A seventh aspect of this application provides a communication system. The communication system includes at least one of the following: a data processing device, a first device, and a second device. The data processing device is configured to perform the method according to any one of the possible implementations in any aspect of the first aspect. The first device stores the first agent in any one of the possible implementations of the first aspect. The second device stores the second agent in any one of the possible implementations of the first aspect.

An eighth aspect of this application provides a communication system. The communication system includes a first agent and a second agent;
the first agent is configured to obtain first response information of first request information;
the second agent is configured to evaluate the first response information to obtain evaluation information;
the first agent is further configured to optimize the first response information based on the evaluation information to obtain second response information; and the first request information and the second response information are used to train a neural network.

A ninth aspect of this application provides a computer-readable storage medium. The storage medium is configured to store one or more computer-executable instructions. When the computer-executable instructions are executed by a processor, the processor performs the method according to any one of the possible implementations in any aspect of the first aspect.

A tenth aspect of this application provides a computer program product (or referred to as a computer program). When a computer program in the computer program product is executed by a processor, the processor performs the method according to any one of the possible implementations in any aspect of the first aspect.

An eleventh aspect of this application provides a chip system. The chip system includes at least one processor, configured to support a data processing device in implementing the method according to any one of the possible implementations in any aspect of the first aspect.

In a possible design, the chip system may further include a memory. The memory is configured to store program instructions and data that are necessary for the data processing device. The chip system may include a chip, or may include a chip and another discrete component. Optionally, the chip system further includes an interface circuit, and the interface circuit provides program instructions and/or data for the at least one processor.

For technical effects brought by any design manner in the second aspect to the eleventh aspect, refer to the technical effects brought by different design manners in the first aspect. Details are not described herein again.

### BRIEF DESCRIPTION OF DRAWINGS

FIG. 1 is a diagram of a structure of a system architecture according to an embodiment of this application;
FIG. 2 is a diagram of a hardware structure of a chip according to an embodiment of this application;
FIG. 3A is a diagram of a structure of a data processing system according to an embodiment of this application;
FIG. 3B is a diagram of another structure of a data processing system according to an embodiment of this application;
FIG. 3C is a diagram of another structure of a data processing system according to an embodiment of this application;
FIG. 4 is a schematic flowchart of a data processing method according to an embodiment of this application;
FIG. 5 is an example flowchart of a data processing method according to an embodiment of this application;
FIG. 6 is another schematic flowchart of a data processing method according to an embodiment of this application;
FIG. 7 is another example flowchart of a data processing method according to an embodiment of this application;
FIG. 8 is another example flowchart of a data processing method according to an embodiment of this application;
FIG. 9 is a schematic flowchart of obtaining neural network training data according to an embodiment of this application;
FIG. 10 is another schematic flowchart of a data processing method according to an embodiment of this application;
FIG. 11 is a diagram of a structure of a data processing device according to an embodiment of this application;
FIG. 12 is a diagram of another structure of a data processing device according to an embodiment of this application; and
FIG. 13 is a diagram of another structure of a data processing device according to an embodiment of this application.

### DESCRIPTION OF EMBODIMENTS

The following describes the technical solutions in embodiments of the present invention with reference to the accompanying drawings in embodiments of the present invention. It is clear that the described embodiments are merely a part rather than all of embodiments of the present invention. All other embodiments obtained by a person of ordinary skill in the art based on embodiments of the present invention without creative efforts fall within the protection scope of the present invention.

For ease of understanding, the following first describes related terms and concepts mainly used in embodiments of this application.

### 1. Neural network

A neural network may include a neuron. The neuron may be an operation unit that uses *Xₛ* and an intercept b as inputs. An output of the operation unit may be as follows: ${h}_{W , b} \left(x\right) = f \left({W}^{T}x\right) = f \left({\sum }_{s = 1}^{n} {W}_{s} {x}_{s} + b\right) .$ s=1, 2, ..., n, n is a natural number greater than 1, *Wₛ* is a weight of *Xₛ,* and b is an offset of the neuron. f is an activation function (activation function) of the neuron, and is used to introduce a nonlinear feature into the neural network, to convert an input signal in the neuron into an output signal. The output signal of the activation function may serve as an input of a next convolutional layer. The activation function may be a sigmoid function. The neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

### 2. Loss function

In a process of training a deep neural network, because it is expected that an output of the deep neural network is as much as possible close to a predicted value that is actually expected, a predicted value of a current network and a target value that is actually expected may be compared, and then a weight vector of each layer of the neural network is updated based on a difference between the predicted value and the target value (certainly, there is usually an initialization process before the first update, to be specific, parameters are pre-configured for all layers of the deep neural network). For example, if the predicted value of the network is high, the weight vector is adjusted to decrease the predicted value, and adjustment is continuously performed, until the neural network can predict the target value that is actually expected. Therefore, "how to obtain, through comparison, the difference between the predicted value and the target value" needs to be predefined. This is a loss function (loss function) or an objective function (objective function). The loss function and the objective function are important equations used to measure the difference between the predicted value and the target value. The loss function is used as an example. A higher output value (loss) of the loss function indicates a larger difference. Therefore, training of the deep neural network becomes a process of minimizing the loss as much as possible.

### 3. Large language model (large language model, LLM)

An LLM is an artificial intelligence algorithm, a neural network-based language model that is pre-trained based on massive text data and that has an extremely large quantity of parameters. For example, the GPT series of OpenAI demonstrates excellent capabilities in processing various tasks such as translation, question answering, and text generation. A pre-training process of the LLM is divided into two main stages: preliminary pre-training and subsequent fine-tuning. In an initial stage, the model is trained on large-scale unlabeled text data to grasp a language structure, for example, by using a "next word prediction" technique. This process enables the model to master the basic application and extensive common sense of a natural language, thereby laying a solid foundation for subsequent applications.

### 4. Supervised learning (supervised learning)

Supervised learning refers to a method of training a model by using labeled data. A training objective is to enable the model to predict a corresponding label after receiving data. Specifically, supervised learning is a model obtained after determining a parameter of an initial AI model based on data in a given training dataset and labels corresponding to the data in the training dataset. A process of determining the parameter of the initial AI model based on the data in the training dataset and the labels corresponding to the data is also referred to as supervised learning (or supervised training). The labels of the data in the training dataset are typically manually labeled to identify a correct answer of the data for a specific task. Typical supervised learning models include: a support vector machine, a neural network model, a logistic regression model, a decision tree, a Naive Bayesian model, a Gaussian discriminative model, and the like. The supervised learning model is typically used for classification or regression.

### 5. Supervised fine-tuning (supervised fine-tuning, SFT)

SFT is a machine learning method in which a pre-trained model is fine-tuned by using labeled data, to adapt to a specific task or a dataset, such as a natural language question answering task.

### 6. Alignment (alignment)

Systems based on large language models are prone to generating false, harmful, or unhelpful content. A process of aligning an output of a model with human preferences and values through various training methods is referred to as alignment.

At present, SFT starts with pre-training a complex model, such as GPT, on a massive unlabeled dataset, with a primary objective of enabling the model to predict the next word in a text. Next, for a specific task, a corresponding labeled dataset is collected or prepared. For example, a text set with a category label is used in a text classification task. The labeled data is then used to fine-tune the pre-trained model, adjust a model weight, and possibly uses different optimizers and learning rate settings to adapt to a new task requirement. Finally, the performance of the model is evaluated on an independent test set to ensure that the model not only performs well on training data, but also can effectively generalize to unknown data.

However, although an SFT method is simple and efficient, it relies heavily on manually labeled data. This dependency means that continuous evolution and improvement of the model are often constrained by an amount of available labeled data, which typically requires a substantial investment of manpower and resources. In addition, given an extensive range of content generated by a large language model, it is difficult to thoroughly resolve, by relying only on a traditional supervised learning method, a problem of false or harmful information probably occurring in content output.

To resolve the foregoing technical problem, embodiments of this application provide a data processing method and a related device, to answer a first request based on a first agent to obtain first response information, and evaluate the first response information based on a second agent. To be specific, the first agent may optimize evaluation information of the first response information by using the second agent, and train a neural network by using information in an optimization process, thereby improving an inference effect of the neural network. Alternatively, it is understood that evolution of the neural network can be sustained through interaction between the first agent and the second agent without relying fully on human supervision. For example, when the neural network includes the first agent and the second agent, it is equivalent to that the neural network may evolve through interaction between the two agents, so that the neural network can be self-improved to sustain self evolution.

Before the data processing method and the related device in embodiments of this application are described with reference to the accompanying drawings, a system architecture provided in embodiments of this application is first described.

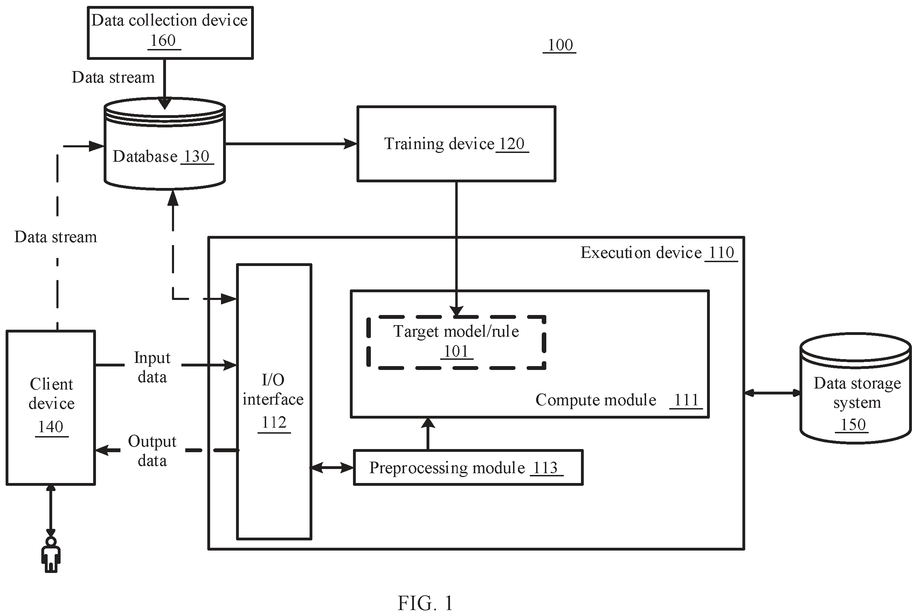

Refer to FIG. 1. An embodiment of the present invention provides a system architecture 100. As shown in the system architecture 100, a data collection device 160 is configured to collect training data. The training data in this embodiment of this application includes: request information and response information of the request information. Alternatively, the training data includes request information, response information of the request information, and evaluation information of the request information. A representation form of the request information may be a text, an image, audio, a video, or the like. This is not specifically limited herein. The evaluation information is used to evaluate quality, accuracy, or the like of the response information. The training data is stored in a database 130, and a training device 120 obtains a target model/rule 101 through training based on the training data maintained in the database 130. The following describes in more detail how the training device 120 obtains the target model/rule 101 based on the training data. The target model/rule 101 can be used to implement the data processing method provided in embodiments of this application. The target model/rule 101 in this embodiment of this application may specifically include a neural network. It should be noted that, during actual application, the training data maintained in the database 130 is not necessarily all collected by the data collection device 160, or may be received from another device. In addition, it should be noted that, the training device 120 does not necessarily train the target model/rule 101 completely based on the training data maintained in the database 130, or may obtain training data from a cloud or another place to perform model training. The foregoing descriptions should not be construed as a limitation on embodiments of this application.

The target model/rule 101 obtained based on the training performed by the training device 120 may be applied to different systems or devices, for example, applied to an execution device 110 shown in FIG. 1. The execution device 110 may be a terminal, such as a mobile phone terminal, a tablet computer, a notebook computer, an AR/VR, or an in-vehicle terminal, or may be a server, a cloud, or the like. In FIG. 1, the execution device 110 is configured with an I/O interface 112 for exchanging data with an external device. A user may input data to the I/O interface 112 through a client device 140. In this embodiment of this application, the input data may include: request information and the like. In addition, the input data may be input by the user, or may be uploaded by the user through a photographing device, or may be output by a second agent, or certainly may be from a database. This is not specifically limited herein.

A preprocessing module 113 is configured to perform preprocessing (for example, splitting, grouping, and format conversion) based on the input data received by the I/O interface 112.

In a related processing process in which the execution device 110 preprocesses the input data or a compute module 111 of the execution device 110 performs computation or the like, the execution device 110 may invoke data, code, and the like in a data storage system 150 for use in corresponding processing, or may store, into the data storage system 150, data, an instruction, and the like obtained through corresponding processing.

Finally, the I/O interface 112 returns a processing result, for example, the foregoing obtained response information, to the client device 140, to provide the processing result for the user.

It should be noted that the training device 120 may generate corresponding target models/rules 101 for different targets or different tasks based on different training data. The corresponding target models/rules 101 may be used to implement the foregoing targets or complete the foregoing tasks, to provide a required result for the user.

For example, when the neural network, a first agent, and the second agent are a same neural network, or when the neural network and the second agent are a same neural network, there may be a plurality of types of tasks or targets for the neural network. Two tasks are used as an example. One task is to obtain the response information of the request information. The other task is to obtain evaluation information of the response information.

In the case shown in FIG. 1, the user may manually provide input data. The input data may be manually provided through a screen provided by the I/O interface 112. In another case, the client device 140 may automatically send the input data to the I/O interface 112. If the client device 140 is required to automatically send the input data, the client device needs to obtain authorization from the user, and the user may set corresponding permission in the client device 140. The user may view, on the client device 140, a result output by the execution device 110. The result may be specifically presented in a specific manner of displaying, a sound, an action, or the like. The client device 140 may alternatively be used as a data collection end, to collect, as new sample data, the input data input to the I/O interface 112 and an output result output from the I/O interface 112 that are shown in the figure, and store the new sample data in the database 130. Certainly, the client device 140 may alternatively not perform collection. Instead, the I/O interface 112 directly stores, in the database 130 as new sample data, the input data input to the I/O interface 112 and the output result output from the I/O interface 112 that are shown in the figure.

It should be noted that FIG. 1 is merely a diagram of a system architecture according to an embodiment of the present invention. A position relationship between a device, a component, a module, and the like shown in the figure constitutes no limitation. For example, in FIG. 1, the data storage system 150 is an external memory relative to the execution device 110. In another case, the data storage system 150 may alternatively be disposed in the execution device 110.

The following describes a hardware structure of a chip according to an embodiment of this application.

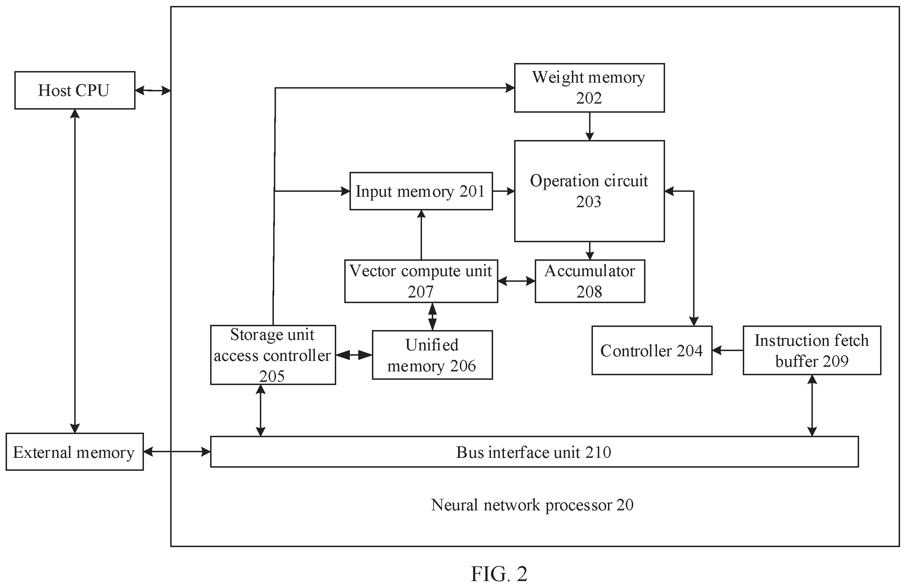

FIG. 2 shows a hardware structure of a chip according to an embodiment of the present invention. The chip includes a neural network processor 20. The chip may be disposed in the execution device 110 shown in FIG. 1, and is configured to complete computation work of the compute module 111. The chip may alternatively be disposed in the training device 120 shown in FIG. 1, and is configured to complete training work of the training device 120 and output the target model/rule 101.

The neural network processor 20 may be any processor suitable for large-scale exclusive OR operation processing, for example, a neural-network processing unit (neural-network processing unit, NPU), a tensor processing unit (tensor processing unit, TPU), or a graphics processing unit (graphics processing unit, GPU). An NPU is used as an example. The neural network processor 20 serves as a coprocessor, and is mounted on a host central processing unit (central processing unit, CPU) (host CPU). The host CPU assigns a task. A core part of the NPU is an operation circuit 203, and a controller 204 controls the operation circuit 203 to extract data in a memory (a weight memory or an input memory) and perform an operation.

In some implementations, the operation circuit 203 includes a plurality of processing units (process engine, PE). In some implementations, the operation circuit 203 is a two-dimensional systolic array. The operation circuit 203 may alternatively be a one-dimensional systolic array or another electronic circuit that can perform arithmetical operations such as multiplication and addition. In some implementations, the operation circuit 203 is a general-purpose matrix processor.

For example, it is assumed that there is an input matrix A, a weight matrix B, and an output matrix C. The operation circuit fetches data corresponding to the matrix B from a weight memory 202, and buffers the data on each PE in the operation circuit. The operation circuit fetches data of the matrix A from an input memory 201, to perform a matrix operation on the matrix B, and stores an obtained partial result or an obtained final result of the matrix in an accumulator 208.

A vector compute unit 207 may perform further processing such as vector multiplication, vector addition, an exponent operation, a logarithm operation, or value comparison on an output of the operation circuit. For example, the vector compute unit 207 may be configured to perform network computing such as pooling (Pooling), batch normalization (Batch Normalization), or local response normalization (Local Response Normalization) at a non-convolutional/non-FC layer in the neural network.

In some implementations, the vector compute unit 207 stores a processed output vector in a unified buffer 206. For example, the vector compute unit 207 may apply a non-linear function to the output of the operation circuit 203, for example, to a vector of an accumulated value, so as to generate an activation value. In some implementations, the vector compute unit 207 generates a normalized value, a combined value, or both. In some implementations, the processed output vector can be used as an activation input of the operation circuit 203, for example, used at a subsequent layer in the neural network.

The unified memory 206 is configured to store input data and output data.

For weight data, a direct memory access controller (direct memory access controller, DMAC) 205 transfers input data in an external memory into the input memory 201 and/or the unified memory 206, stores weight data in the external memory into the weight memory 202, and stores data in the unified memory 206 into the external memory.

A bus interface unit (bus interface unit, BIU) 210 is configured to implement interaction between the host CPU, the DMAC, and an instruction fetch buffer 209 through a bus.

The instruction fetch buffer (instruction fetch buffer) 209 connected to the controller 204 is configured to store an instruction used by the controller 204.

The controller 204 is configured to invoke the instruction buffered in the instruction fetch buffer 209, to control a working process of an operation accelerator.

Generally, the unified memory 206, the input memory 201, the weight memory 202, and the instruction fetch buffer 209 each are an on-chip (On-Chip) memory. The external memory is a memory outside the NPU. The external memory may be a double data rate synchronous dynamic random access memory (double data rate synchronous dynamic random access memory, DDR SDRAM for short), a high bandwidth memory (high bandwidth memory, HBM), or another readable and writable memory.

The following describes several data processing system scenarios in this application.

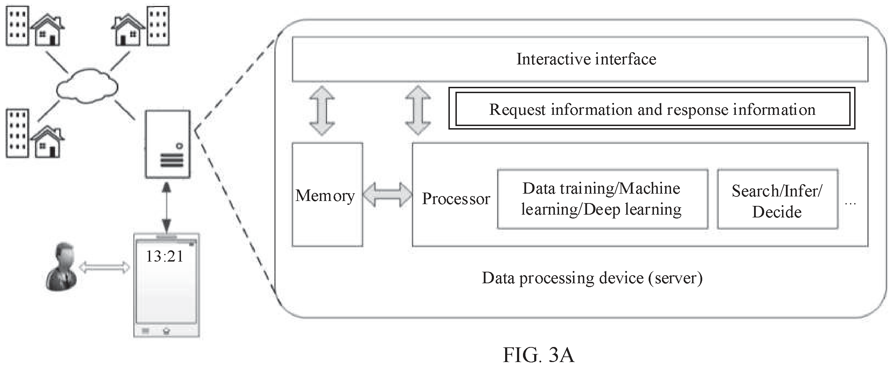

FIG. 3A is a structural diagram of a data processing system according to an embodiment of this application. The data processing system includes a terminal device (in FIG. 3A, only a mobile phone is used as an example of the terminal device) and a data processing device. It may be understood that, in addition to being the mobile phone, the terminal device may be a terminal device such as a tablet computer (pad), a portable game console, a palmtop computer (personal digital assistant, PDA), a notebook computer, an ultra mobile personal computer (ultra mobile personal computer, UMPC), a handheld computer, a netbook, a vehicle-mounted media playback device, a wearable electronic device, a virtual reality (virtual reality, VR) terminal device, an augmented reality (augmented reality, AR) terminal device, a vehicle, a vehicle-mounted terminal, an airplane terminal, or an intelligent robot. The terminal device is an initiating end of data processing, and is used as an initiator of a data processing request. Generally, a user initiates a request through the terminal device.

The data processing device may be a device or a server with a data processing function, for example, a cloud server, a network server, an application server, or a management server. The data processing device receives the data processing request from the terminal device through an interaction interface, and then performs, by using a data storage memory and a data processing processor, data processing in such manners as machine learning, deep learning, search, inference, and decision-making. The memory in the data processing device may be a collective term, and includes a local storage and a database for storing historical data. The database may be deployed on the data processing device or another network server.

In the data processing system shown in FIG. 3A, the terminal device may receive an instruction from the user. For example, the terminal device may obtain request information input/selected by the user, and then initiate a request to the data processing device, so that the data processing device executes a data processing application (for example, a computer vision task such as classification, segmentation, detection, and image generation) based on the request information obtained by the terminal device, thereby obtaining a processing result corresponding to the request information. For example, the terminal device may obtain a question input by the user, and then initiate a request to the data processing device, so that the data processing device performs inference on the question, thereby obtaining an answer to the question. In addition, the answer is displayed for the user to watch and use.

In FIG. 3A, the data processing device may perform the data processing method according to embodiments of this application.

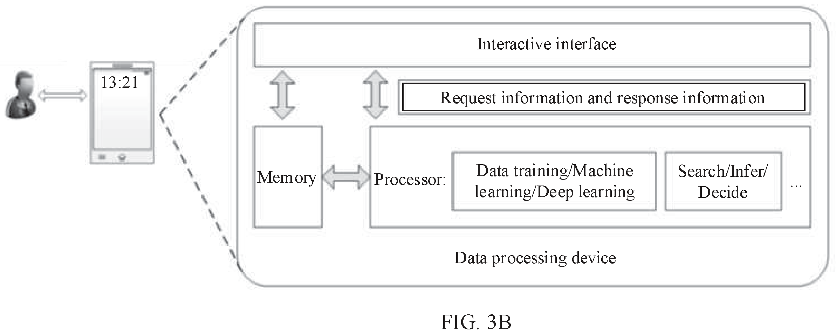

FIG. 3B is a diagram of another structure of the data processing system according to an embodiment of this application. In FIG. 3B, a terminal device (in FIG. 3B, only a mobile phone is used as an example of the terminal device) is directly used as the data processing device. The terminal device can directly obtain request information, and hardware of the terminal device directly processes the request information. A specific process is similar to that of FIG. 3A. Reference may be made to the foregoing descriptions. Details are not described herein again.

Optionally, in the data processing system shown in FIG. 3B, the terminal device may receive an instruction from the user. For example, the terminal device may obtain request information input by the user in the terminal device, and then the terminal device executes a data processing application (for example, a computer vision task such as classification, segmentation, detection, and image generation) based on the request information, thereby obtaining response information corresponding to the request information. In addition, the response information is displayed for the user to watch and use.

In FIG. 3B, the terminal device may perform the data processing method according to embodiments of this application.

The terminal device in FIG. 3A and FIG. 3B may be specifically the client device 140 or the execution device 110 in FIG. 1. The data processing device in FIG. 3A may be specifically the execution device 110 in FIG. 1. The data storage system 150 may store data to be processed by the execution device 110. The data storage system 150 may be integrated on the execution device 110, or may be disposed on a cloud or another network server.

A processor in FIG. 3A and FIG. 3B may perform data training/machine learning/deep learning through a neural network model or another model (for example, an attention model or an MLP), and uses a model ultimately obtained after data training or learning to perform a data processing application based on a plurality of pieces of data, thereby obtaining a corresponding processing result.

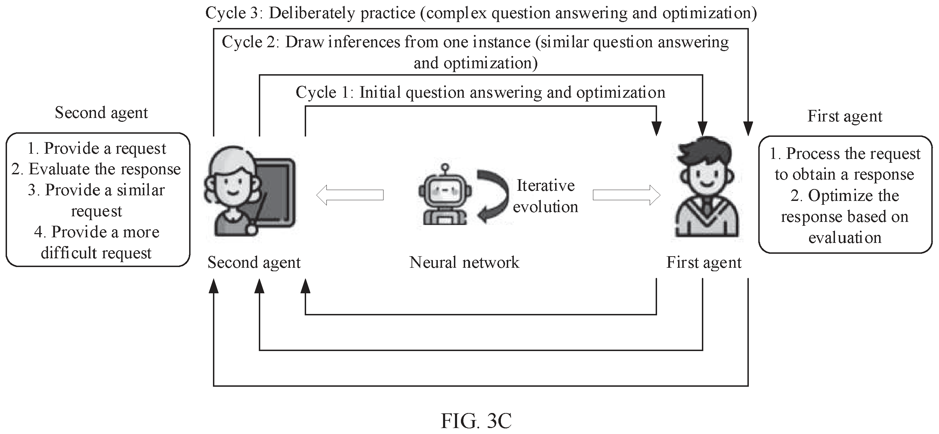

FIG. 3C is diagram of another structure of the data processing system according to an embodiment of this application. The data processing system may include: a first agent, a second agent, and a neural network.

The data processing system shown in FIG. 3C may include one or more circles. For example, the data processing system includes cycle 1. For another example, the data processing system includes cycle 1 and cycle 2. For another example, the data processing system includes cycle 1 and cycle 3. For another example, the data processing system includes cycle 1, cycle 2, and cycle 3. Certainly, the data processing system may alternatively include cycle 2, or include cycle 3, or include both cycle 2 and cycle 3, or the like. This is not specifically limited herein.

Cycle 1 may also be referred to as an initial question answering and optimization process. Cycle 2 may also be referred to as a similar question answering and optimization process. Cycle 3 may also be referred to as a complex question answering and optimization process.

In cycle 1, the second agent provides a request (or referred to as request information), the first agent processes the request to obtain a response (or referred to as response information), the second agent evaluates the response, and the first agent optimizes the response based on the evaluation (or referred to as evaluation information). Alternatively, it is understood that, in cycle 1, a student agent answers an initial request proposed by a teacher agent, and continuously optimizes a response of the student agent based on feedback from a teacher until the student agent passes evaluation performed by the teacher agent. The process of the circle 1 may also be understood as a self-improvement answering process (or a reflection and optimization process).

In cycle 2, the second agent provides a similar request, the first agent processes the similar request to obtain a response, the second agent evaluates the response, and the first agent optimizes the response based on the evaluation. Alternatively, it is understood that, in cycle 2, the teacher agent provides a plurality of requests similar to the initial request. Then, the student agent answers the similar requests proposed by the teacher agent with reference to the process of the circle 1 until a requirement of the teacher agent is met. The process of cycle 2 may also be understood as a process of "drawing inferences from one instance".

In cycle 3, the second agent provides a more difficult request (more difficult or more complex than the request in the cycle 1 or the similar request in cycle 2), the first agent processes the more difficult request to obtain a response, the second agent evaluates the response, and the first agent optimizes the response based on the evaluation. Alternatively, it is understood that, in cycle 3, the teacher agent issues several more difficult requests to the student agent, starting from the initial request. Then, the student agent answers the difficult requests proposed by the teacher agent with reference to the process of the circle 1 until a requirement of the teacher agent is met. The process of cycle 3 may also be understood as a process of "deliberately training" (or from easy to difficult). A complex instruction evolution capability is used to gradually construct more difficult requests, thereby allowing an inference capability of the neural network to gradually advance.

Data (for example, including at least one of the following: the initial request and an initial response, the similar requests and corresponding responses, the difficult requests and corresponding responses, and evaluation of each response) generated in the processes of the foregoing cycles may be used for training the neural network, to improve the inference capability and an alignment effect of the neural network.

In addition, the first agent, the second agent, and the neural network may be of a same model or different models. For example, the first agent, the second agent, and the neural network are of a same model. For another example, the second agent and the neural network are of a same model, and the first agent is of another model. For another example, the first agent and the second agent are of a same model, and the neural network is of another model. A relationship between the first agent, the second agent, and the neural network is not limited in this embodiment of this application. It may be understood that, when the first agent, the second agent, and the neural network are of a same model, the data processing system may also be understood as a self-improvement question answering system.

The following describes the first agent and the second agent by using an example in which the data processing system includes cycle 1, cycle 2, and cycle 3.

The first agent may also be referred to as a student agent or a student model. The first agent is mainly used to: 1. process a request to obtain a response (or understood as answering a question); and 2. optimize the response based on evaluation.

The second agent may also be referred to as a teacher agent or a teacher model. The second agent is mainly used to: 1. provide a request; 2. evaluate a response; 3. provide a similar request; and 4. provide a more difficult request.

It may be understood that, the foregoing requests may be provided by the second agent, or may be provided by a user, or may be extracted from a database or a memory, or the like. This is not specifically limited herein.

A neural network is trained by using information in the foregoing cycles. Alternatively, it is understood that, the information obtained through interaction between the first agent and the second agent is used as training data to train the neural network.

In the foregoing data processing system, a plurality of agents perform interactive dialogues with reference to an approach of "drawing inferences from one instance" and "deliberately practicing" in a human learning and thinking process. In one aspect, comprehensive and high-quality training data may be constructed, for self-training, from a horizontal (generalization to increase robustness) dimension and a vertical (progressively learning the complex request) dimension in combination with a self-improvement approach. In another aspect, an optimized neural network may generate higher-quality data to implement iterative evolution.

The following describes in detail the data processing method in embodiments of this application with reference to accompanying drawings.

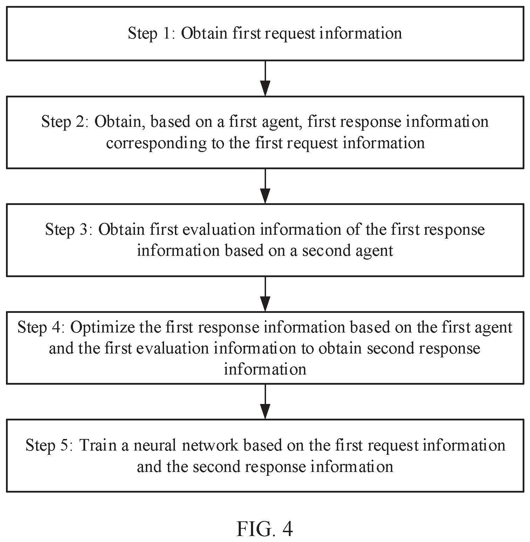

Refer to FIG. 4. In an embodiment of the data processing method provided in embodiments of this application, the method may be performed by a data processing device (a terminal device/a cloud server), or may be performed by a component (for example, a processor, a chip, or a chip system) of a data processing device. The method includes step 1 to step 5. The method may be applied to a model training scenario.

Step 1: Obtain first request information.

In this embodiment of this application, the data processing device may obtain the first request information in a plurality of manners. The request information may be collected/photographed, or may be input by a user, or may be sent by another device, or may be selected from a database. This is not specifically limited herein.

In this embodiment of this application, the first request information may also be understood as request information input by the user. Specifically, the first request information may be a question (which may also be referred to as a query) input/selected by the user, a word processing request (for example, a summary analysis request) input/selected by the user, a translation request input/selected by the user, or the like. This is not specifically limited herein. In addition, in this embodiment of this application, the request information (for example, the first request information or second request information) may be carried in a text, an image, a voice, or the like. This is not specifically limited herein.

It should be noted that, the first request information may be an initial request input by the user, or may be a similar request provided based on an initial request, or may be a complex request provided based on an initial request or a similar request, or the like. This is not specifically limited herein.

In a possible implementation, the user may directly input the first request information to the data processing device through a peripheral device (for example, a USB flash drive, a keyboard, or a mouse).

In another possible implementation, the data processing device may determine the first request information through a user operation. For example, the data processing device displays an interface to the user, the interface including a plurality of options; and then, the data processing device determines the first request information based on operations (for example, a tap selection operation and a voice operation) performed by the user based on the plurality of options.

In another possible implementation, a second agent provides the first request information.

Example 1: For example, the first request information is specifically a query (or referred to as a question), and is carried in a text. The first request information is: "A sold cookies to 36 friends in March, and sold twice the quantity in April. How many cookies did A sell in total?".

Step 2: Obtain, based on a first agent, first response information corresponding to the first request information.

After obtaining the first request information, the data processing device obtains, based on the first agent, the first response information corresponding to the first request information. The first response information may also be understood as response information obtained by the first agent by processing the first request information.

The first agent, the second agent, and a neural network in this embodiment of this application are a same neural network or different neural networks. In addition, the first agent, the second agent, and the neural network may be located in a same compute device or different compute devices.

In a possible implementation, the first agent is located in a first device, and the first device and the data processing device are different devices. In this case, this step includes: sending, by the data processing device, the first request information to the first device. Correspondingly, the first device receives the first request information sent by the data processing device. The first device processes the first request information by using the first agent to obtain the first response information. The first device sends the first response information to the data processing device. Correspondingly, the data processing device receives the first response information sent by the first device. It may be understood that, the first device may directly send the first response information to the data processing device, or may send the first response information to the data processing device through an intermediate device (for example, a subsequent second device). This is not specifically limited herein.

In another possible implementation, the first agent is located in the data processing device. In this case, this step includes: processing, by the data processing device, the first request information by using the first agent to obtain the first response information.

The first agent may be understood as a model, and can process request information to obtain response information.

The foregoing process of processing the first request information by using the first agent to obtain the first response information may also be understood as: inputting the first request information into the first agent to obtain the first response information.

For example, continuing with the foregoing example, the first request information "A sold cookies to 36 friends in March, and sold twice the quantity in April. How many cookies did A sell in total?" is input to the first agent, to obtain the first response information. The first response information is "36(March)+72(April)=108".

Step 3: Obtain first evaluation information of the first response information based on the second agent.

After obtaining the first response information, the data processing device may obtain the first evaluation information of the first response information based on the second agent.

In a possible implementation, the second agent is located in a second device, and the second device and the data processing device are different devices. In this case, this step includes: sending, by the data processing device, the first response information to the second device. Correspondingly, the second device receives the first response information sent by the data processing device. The second device processes the first response information by using the second agent to obtain the first evaluation information. The second device sends the first evaluation information to the data processing device. Correspondingly, the data processing device receives the first evaluation information sent by the second device.

In another possible implementation, the second agent is located in the data processing device. In this case, this step includes: processing, by the data processing device, the first response information by using the second agent to obtain the first evaluation information.

The second agent may be understood as a model, and can evaluate response information to obtain evaluation information. For example, the second agent may evaluate quality, accuracy, or the like of the response information.

In this embodiment of this application, the evaluation information may include at least one of the following: a score of the response information, a reason for scoring, an analysis of the response information, an improvement suggestion, and the like. A representation form of scoring may be a numerical score, or may be a quality level (for example, excellent, good, medium, poor, or bad).

The foregoing process of processing the first response information by using the second agent to obtain the first evaluation information may also be understood as: inputting the first response information into the second agent to obtain the first evaluation information.

It may be understood that, to improve a capability of the second agent to understand the first response information, the first request information and/or a first preset template may be added. The first preset template is used by the second agent to specify an inference task. For example, the first preset template includes: "Please evaluate the first response information corresponding to the first request information, and provide an evaluation analysis and an improvement suggestion". For another example, the first preset template includes: "Please analyze and evaluate the quality of the first response information and provide a score (1 to 10)". For another example, the preset template includes: the first preset template includes: "Please analyze and evaluate the quality of the first response information and provide a score (1 to 10). If the score is greater than 9, reply that no improvement is required. Otherwise, please provide evaluation".

For example, continuing with the foregoing example, the first response information {36(March)+72(April)=108} is input to the second agent to obtain the first evaluation information. The first evaluation information is: "The answer is clear, but because it is not known that how many cookies each friend received, variables and equations should be set. The score is 6, and modification is required".

Step 4: Optimize the first response information based on the first agent and the first evaluation information to obtain second response information.

After obtaining the first evaluation information, the data processing device may optimize the first response information based on the first agent and the first evaluation information to obtain the second response information.

In a possible implementation, the first agent is located in a first device, and the first device and the data processing device are different devices. In this case, this step includes: sending, by the data processing device, the first evaluation information to the first device. Correspondingly, the first device receives the first evaluation information sent by the data processing device. The first device optimizes the first response information by using the first agent and the first evaluation information to obtain the second response information. The first device sends the second response information to the data processing device. Correspondingly, the data processing device receives the second response information sent by the first device. Similarly, the first device may directly send the second response information to the data processing device, or may send the second response information to the data processing device through an intermediate device (for example, the second device). This is not specifically limited herein.

In another possible implementation, the first agent is located in the data processing device. In this case, this step includes: optimizing, by the data processing device, the first response information by using the first agent and the first rating information to obtain the second response information.

The foregoing process of optimizing the first response information by using the first agent and the first rating information to obtain the second response information may also be understood as: inputting the first request information, the first response information, and the first evaluation information into the first agent to obtain the second response information.

It may be understood that, to improve understanding of an optimization process by the first agent, the first request information and/or a second preset template may be added. The second preset template is used by the first agent to specify an optimization task. For example, the second preset template includes: "Please optimize the first response information based on the first evaluation information for the first response information to obtain the second response information, to improve accuracy of the second response information", and the like.

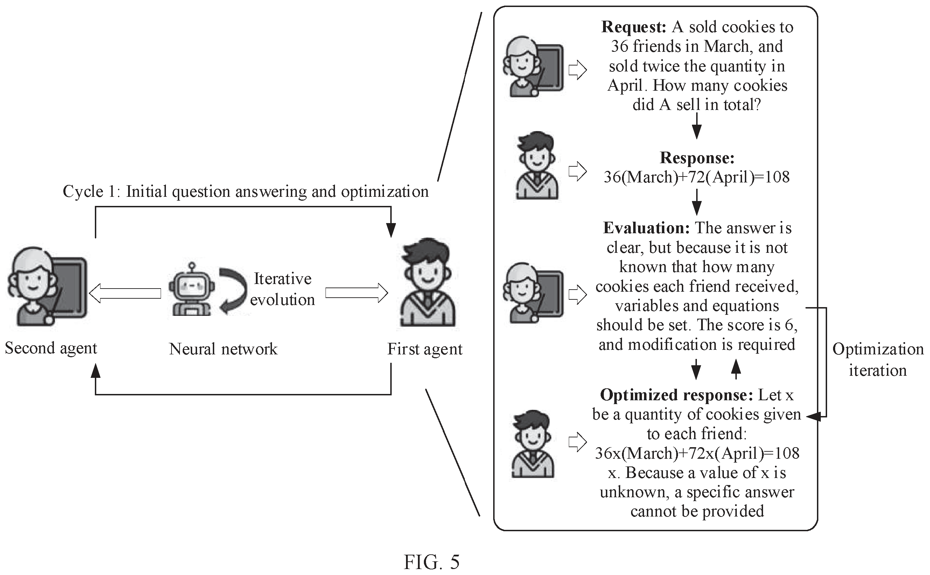

For example, continuing with the foregoing Example 1, the first request information, the first response information, and the first evaluation information are input to the first agent to obtain the second response information. The second response information is: "Let x be a quantity of cookies given to each friend: 36x(March)+72x(April)=108x. Because a value of x is unknown, a specific answer cannot be provided". Certainly, the optimized second response information may be further evaluated based on the second agent, and if a score does not meet a threshold, the response information may be further updated by using the first agent and new rating, until the score of the response information meets the threshold. An overall example process may be shown in FIG. 5.

It should be noted that, the evaluation process in step 3 and the optimization process in step 4 may be executed for one or more times. Alternatively, it is understood that, a quantity of times of optimization iteration may be one or more times. A stop condition may be that the quantity of times of optimization iteration reaches a preset threshold, or may be that the score of the optimized response information is higher than a preset threshold. This is not specifically limited herein. For example, after the optimized response information is obtained based on the first agent, the response information may be updated again based on evaluation information of the second agent for the optimized response information until the stop condition is met.

Step 5: Train the neural network based on the first request information and the second response information.

After obtaining the first request information and the second response information, the data processing device may train the neural network based on the first request information and the second response information. For a relationship or descriptions between the neural network, the first agent, and the second agent, refer to the descriptions in FIG. 3C. Details are not described herein again.

Optionally, the first request information is used as training data, the second response information is used as a label of the training data, and the neural network is trained with a target that a value of a loss function is less than a threshold. The loss function is used to represent a difference between an output of the neural network and the label.

The foregoing loss function may be L1, L2, L3, cross entropy, KL dispersion, or the like. The threshold may be set according to an actual requirement. A structure of the loss function and a value of the threshold are not limited herein. In addition, the neural network obtained before the training may be a neural network selected by the user, or may be a preset neural network, or the like. This is not specifically limited herein. The neural network may be a convolutional neural network (convolutional neuron network, CNN), a feedforward neural network (feedforward neural network, FNN), a recursive neural network (recursive neural network, RNN) (for example, a long short-term memory network, a gated recurrent unit, or an attention network), a transformer, a generative adversarial network (generative adversarial network, GAN), an LLM, or the like. A specific structure and a type of the neural network are not limited in embodiments of this application.

Optionally, after the foregoing iterative interaction process, structurally multi-dimensional model training data is generated. For example, at least one of the following is generated: an initial request and a response, liberalization process data, evaluation information, and the like. The data is considered as multi-dimensional training data and is added to model training to improve a capability of a module. This process can then be performed continuously and interactively, so that the model can evolve continuously and interactively.

In this embodiment of this application, a first request is answered based on the first agent to obtain the first response information, and the first response information is evaluated based on the second agent. To be specific, the first agent may perform optimization based on the evaluation information provided by the second agent for the first response information, and train the neural network by using information in an optimization process, thereby improving an inference effect of the neural network. Alternatively, it is understood that evolution of the neural network can be sustained through interaction between the first agent and the second agent without relying fully on human supervision. For example, when the neural network includes the first agent and the second agent, it is equivalent to that the neural network may evolve through interaction between the two agents, so that the neural network can be self-improved to sustain self evolution.

The foregoing describes the data processing method provided in embodiments of this application by using FIG. 4. The embodiment shown in FIG. 4 may alternatively be understood as the process of cycle 1 shown in FIG. 3C. The following describes several other data processing methods provided in this application.

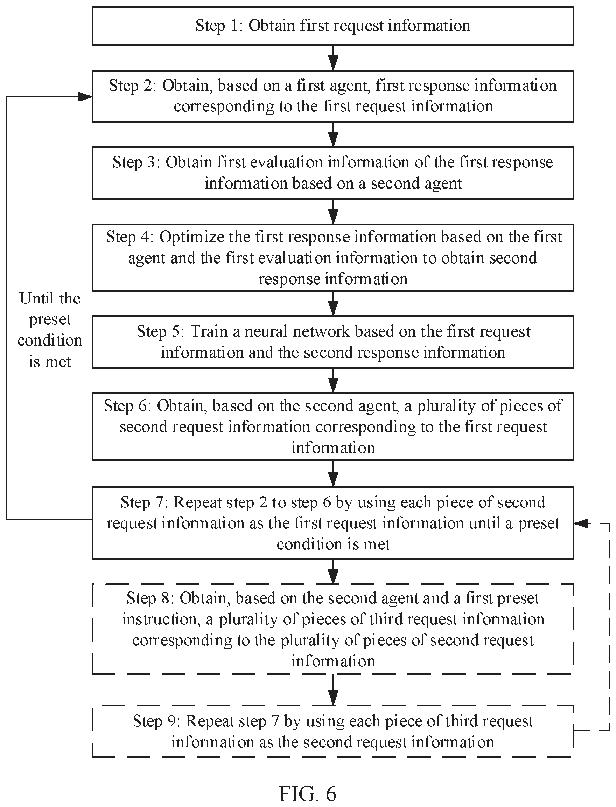

Refer to FIG. 6. In an embodiment of the data processing method provided in embodiments of this application, the method may be performed by a data processing device (a terminal device/a cloud server), or may be performed by a component (for example, a processor, a chip, or a chip system) of a data processing device. The method includes step 1 to step 9. The method may be applied to a model training scenario.

Step 1: Obtain first request information.

Step 2: Obtain, based on a first agent, first response information corresponding to the first request information.

Step 3: Obtain first evaluation information of the first response information based on a second agent.

Step 4: Optimize the first response information based on the first agent and the first evaluation information to obtain second response information.

Step 5: Train a neural network based on the first request information and the second response information.

For descriptions of step 1 to step 5 in this embodiment, refer to the descriptions in the embodiment shown in FIG. 4. Details are not described herein again.

Step 6: Obtain, based on the second agent, a plurality of pieces of second request information corresponding to the first request information.

After obtaining the first request information, the data processing device may further obtain, based on the second agent, the plurality of pieces of second request information corresponding to the first request information. Similarity between each piece of second request information in the plurality of pieces of second request information and the first request information is greater than or equal to a first preset threshold.

This step may also be understood as that the second agent is used to provide a plurality of pieces of second request information similar to the first request information.

The second agent may also be configured to provide a plurality of pieces of similar request information for a request information. Alternatively, it is understood that, the second agent may extend or generalize the request information. That the first request information is approximate to the second request information may include at least one of the following: the first request information and the second request information have a same or approximate mathematical expression (for example, both are addition operations, subtraction operations, multiplication operations, and division operations), the first request information and the second request information have a same or approximate mathematical unit, and the like.

In a possible implementation, the second agent is located in a second device, and the second device and the data processing device are different devices. In this case, this step includes: sending, by the data processing device, the first request information to the second device. Correspondingly, the second device receives the first request information sent by the data processing device. The second device processes the first request information by using the second agent to obtain a plurality of pieces of similar request information (that is, the plurality of pieces of second request information, which may also be referred to as a plurality of similar questions). The second device sends the plurality of pieces of second request information to the data processing device. Correspondingly, the data processing device receives the plurality of pieces of second request information sent by the second device.

In another possible implementation, the second agent is located in the data processing device. In this case, this step includes: processing, by the data processing device, the first request information by using the second agent to obtain a plurality of pieces of similar request information.

Optionally, processing of processing the first request information to obtain the plurality of pieces of second request information may include: replacement, modification, deletion, and the like. For example, if the request information is a text, a value, a date, a unit of measurement, a noun, a verb, an adjective, an adverb indicating a degree, a color, and the like in the text may be modified or replaced.

It may be understood that, for the second agent to understand a similar extension process, the first request information and/or a third preset template may be added. The third preset template is used by the second agent to perform similarity extension with reference to previous request information. For example, the third preset template includes: "Please provide similar second request information with reference to the first request information". For another example, the third preset template includes: "Please provide similar second request information with reference to the first request information, where solutions of the second request information and the first request information are similar". For another example, the third preset template includes: "Please provide similar second request information with reference to the first request information, where solutions of the second request information and the first request information are similar, but may have different numbers and expressions".

For example, continuing with the example of the first request information in the embodiment shown in FIG. 4, the first request information is: "A sold cookies to 36 friends in March, and sold twice the quantity in April. How many cookies did A sell in total?". One piece of second request information obtained by performing similarity extension on the first request information by the second agent is: "A sold stickers to 24 friends in March, and sold 1/3 of the quantity in February. How many stickers did A sell in total?".

Step 7: Repeat step 2 to step 6 by using each piece of second request information as the first request information until a preset condition is met.

After obtaining the plurality of pieces of second request information, the data processing device may repeat step 2 to step 6 by using each piece of second request information as the first request information until the preset condition is met.

The preset condition includes at least one of the following: a quantity of times of repetition meets a second preset threshold, a quantity of pieces of request information meets a third preset threshold, and evaluation information obtained after the repetition meets a preset requirement.

A process of step 6 and step 7 may be understood as the process of "drawing inferences from one instance" in cycle 2 in the embodiment shown in FIG. 3C.

It may be understood that, to enable the first agent to perform an inference process of the second request information with reference to the previous first request information and second response information, the first request information, the second response information, and/or a fourth preset template may be added. The fourth preset template is used by the first agent to perform current answering with reference to the previous question answering. For example, the fourth preset template includes: "Please answer current request information (that is, the second request information) with reference to the first request information and the second response information".

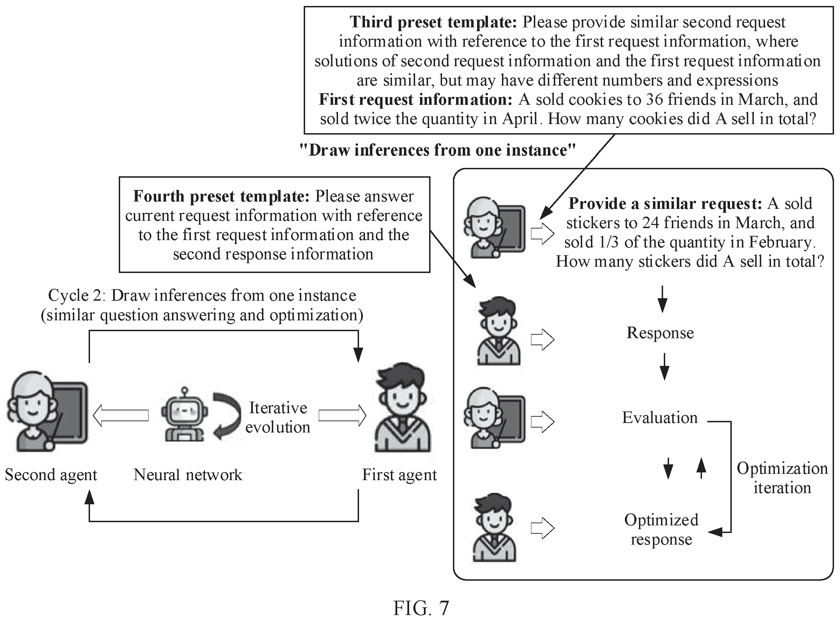

For example, continuing with the foregoing example, the example process of "drawing inferences from one instance" in step 6 and step 7 may be as shown in FIG. 7.

Step 8: Obtain, based on the second agent and a first preset instruction, a plurality of pieces of third request information corresponding to the plurality of pieces of second request information. This step is optional.

Optionally, the data processing device may further obtain, based on the second agent and the first preset instruction, the plurality of pieces of third request information corresponding to the plurality of pieces of second request information. The first preset instruction is used to improve complexity of each piece of second request information.

This step may also be understood as that the second agent and the first preset instruction are used to provide a plurality of pieces of third request information that are more complex or difficult than the first request information.

It may be understood that, for the second agent to understand a process of providing complex request information, the first request information and/or the fourth preset template may be added. The fourth preset template is used by the second agent to extend the complex request information with reference to the previous request information. For example, the fifth preset template includes: "Please provide more difficult third request information with reference to the first request information". For another example, the fifth preset template includes: "Please provide more difficult third request information with reference to the first request information, and add more conditions and limitations, so that mathematical computation or solving difficulty of the third request information increases".

For example, the first request information is: "A sold cookies to 36 friends in March, and sold twice the quantity in April. How many cookies did A sell in total?". One piece of third request information obtained by performing complexity extension on the first request information by the second agent is: "A sold cookies to 36 friends in March, sold twice the quantity in April, and additionally donated 15 cookies to a charity. How many cookies did A lose in total?".

Step 9: Repeat step 7 by using each piece of third request information as each piece of second request information. This step is optional.

Optionally, after obtaining the plurality of pieces of third request information, the data processing device may further repeat step 7 by using each piece of third request information as each piece of second request information.

A process of step 8 and step 9 may be understood as the process of "deliberate learning" in cycle 3 in the embodiment shown in FIG. 3C.

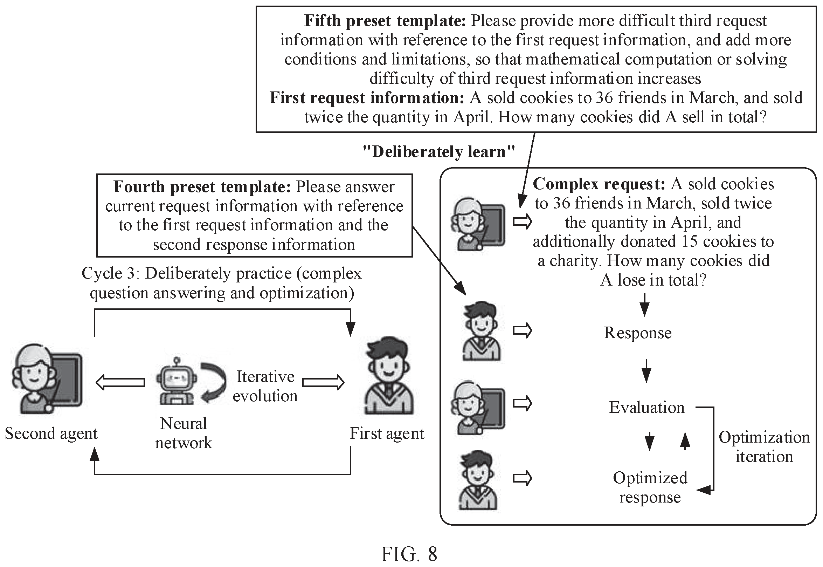

For example, continuing with the foregoing example, the example process of "deliberate learning" in step 8 and step 9 may be as shown in FIG. 8.

It may be understood that, there are a plurality of cases in the embodiment shown in FIG. 5. In a possible implementation, the embodiment shown in FIG. 5 includes step 1 to step 9. This case may be understood as a solution of cycle 1+cycle 2+cycle 3 shown in FIG. 3C. In another possible implementation, the embodiment shown in FIG. 5 includes step 1 to step 7. This case may be understood as a solution of cycle 1+cycle 2 shown in FIG. 3C.

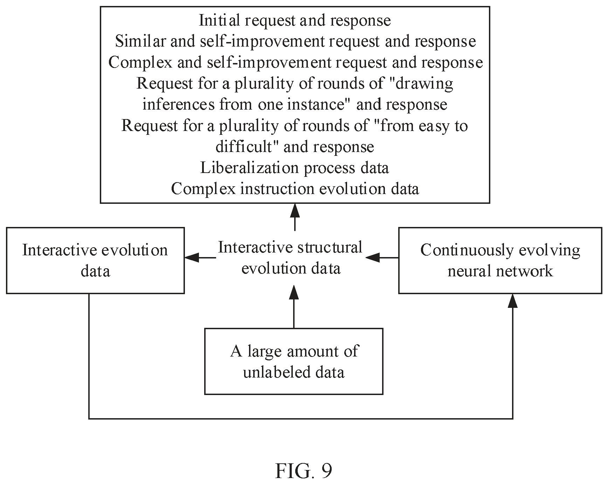

It may be understood that, as shown in FIG. 9, after the iterative interaction process of the foregoing three cycles, structurally multi-dimensional model training data is generated. For example, at least one of the following is generated: an initial request and a response, a similar and self-improvement request and a response, a complex and self-improvement request and a response, a request for a plurality of rounds of "drawing inferences from one instance" and a response, a request for a plurality of rounds of "from easy to difficult" and a response, liberalization process data, complex instruction evolution data, and the like. The data is considered as multi-dimensional training data and is added to model training to improve a capability of a module. This process can then be performed continuously and interactively, so that the model can evolve continuously and interactively.

In this embodiment, a plurality of agents perform interactive dialogues with reference to an approach of "drawing inferences from one instance" and "deliberately practicing" in a human learning and thinking process. In one aspect, comprehensive and high-quality training data may be constructed, for self-training, from a horizontal (generalization to increase robustness) dimension and a vertical (progressively learning the complex request) dimension in combination with a self-improvement approach. In another aspect, an optimized neural network may generate higher-quality data to implement iterative evolution.

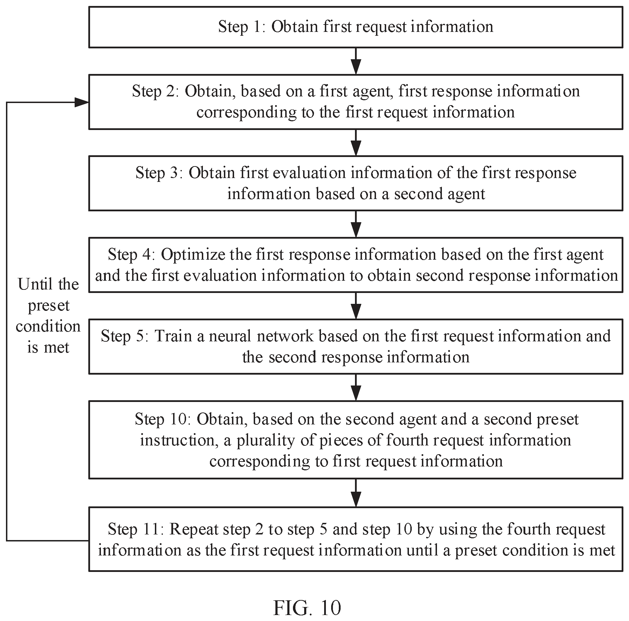

Refer to FIG. 10. In an embodiment of the data processing method provided in embodiments of this application, the method may be performed by a data processing device (a terminal device/a cloud server), or may be performed by a component (for example, a processor, a chip, or a chip system) of a data processing device. The method includes step 1 to step 5, step 10, and step 11. The method may be applied to a model training scenario.

Step 1: Obtain first request information.

Step 2: Obtain, based on a first agent, first response information corresponding to the first request information.

Step 3: Obtain first evaluation information of the first response information based on a second agent.

Step 4: Optimize the first response information based on the first agent and the first evaluation information to obtain second response information.

Step 5: Train a neural network based on the first request information and the second response information.

For descriptions of step 1 to step 5 in this embodiment, refer to the descriptions in the embodiment shown in FIG. 4. Details are not described herein again.

Step 10: Obtain, based on the second agent and a second preset instruction, fourth request information corresponding to first request information.

After obtaining the first request information, the data processing device may obtain, based on the second agent and the second preset instruction, the fourth request information corresponding to the first request information. The second preset instruction is used to improve complexity of the first request information.

Step 11: Perform step 2 to step 5 and step 10 by using the fourth request information as the first request information until a preset condition is met.

After obtaining the fourth request information, the data processing device may perform step 2 to step 5 and step 10 by using the fourth request information as the first request information until the preset condition is met.

The preset condition includes at least one of the following: a quantity of times of repetition meets a second preset threshold, a quantity of pieces of request information meets a third preset threshold, and evaluation information obtained after the repetition meets a preset requirement.

The embodiment shown in FIG. 10 may be understood as a solution of cycle 1+cycle 3 shown in FIG. 3C. A process of step 10 and step 11 may be understood as the process of "deliberate learning" in cycle 3 in the embodiment shown in FIG. 3C.

Similarly, after the foregoing iterative interaction process of cycle 1 and cycle 3 is performed, structurally multi-dimensional model training data is generated. For example, at least one of the following is generated: an initial request and a response, a complex and self-improvement request and a response, a request for a plurality of rounds of "from easy to difficult" and a response, liberalization process data, complex instruction evolution data, and the like. The data is considered as multi-dimensional training data and is added to model training to improve a capability of a module. This process can then be performed continuously and interactively, so that the model can evolve continuously and interactively.

In this embodiment, on one hand, a plurality of agents perform interactive dialogues with reference to an approach of "deliberately practicing" in a human learning and thinking process. In addition, comprehensive and high-quality training data may be constructed, for self-training, from a vertical (progressively learning a complex request) dimension in combination with a self-improvement approach. Furthermore, an optimized neural network may generate higher-quality data to implement iterative evolution.

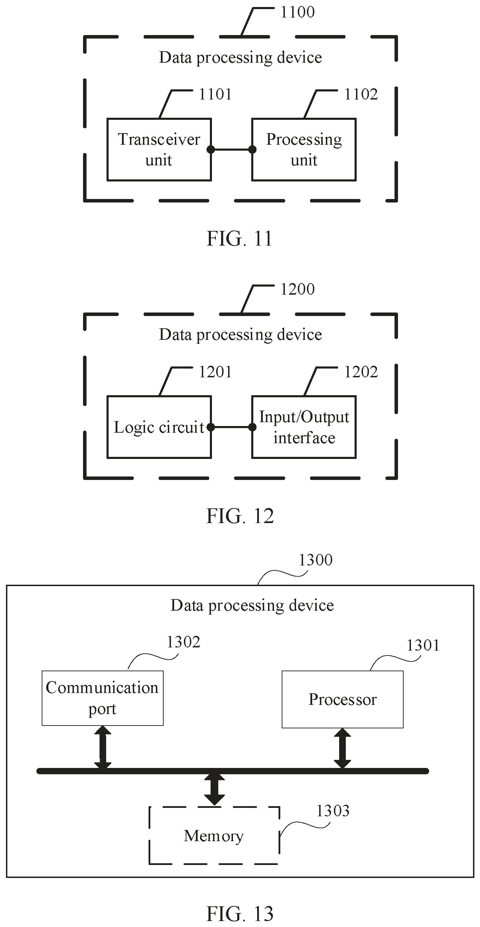

The foregoing describes the communication method in embodiments of this application. The following describes the data processing device in embodiments of this application. Refer to FIG. 11, an embodiment of a data processing device 1100 in an embodiment of this application. The data processing device 1100 may implement the function of the first device or the second device in the foregoing method embodiments, and therefore can implement beneficial effects of the foregoing method embodiments. In this embodiment of this application, the data processing device 1100 may be a data processing device, or may be an integrated circuit, an element, or the like, for example, a chip in the data processing device. The data processing device 1100 includes a transceiver unit 1101 and a processing unit 1102.

The transceiver unit 1101 is configured to perform step 1: obtaining first request information;
the processing unit 1102 is configured to perform step 2: obtaining, based on a first agent, first response information corresponding to the first request information;
the processing unit 1102 is further configured to perform step 3: obtaining evaluation information of the first response information based on a second agent;
the processing unit 1102 is further configured to perform step 4: optimizing the first response information based on the first agent and the evaluation information to obtain second response information; and
the processing unit 1102 is further configured to perform step 5: training a neural network based on the first request information and the second response information.

Optionally, the processing unit 1102 is further configured to perform step 6: obtaining, based on the second agent, a plurality of pieces of second request information corresponding to the first request information, similarity between each piece of second request information in the plurality of pieces of second request information and the first request information being greater than or equal to a first preset threshold; and the processing unit 1102 is further configured to perform step 7: repeating step 2 to step 6 by using each piece of second request information as the first request information until a preset condition is met, the preset condition including at least one of the following: a quantity of times of repetition meets a second preset threshold, a quantity of pieces of request information meets a third preset threshold, and evaluation information obtained after the repetition meets a preset requirement.

Optionally, the processing unit 1102 is further configured to perform step 8: obtaining, based on the second agent and a first preset instruction, a plurality of pieces of third request information corresponding to the plurality of pieces of second request information, the first preset instruction being used to improve complexity of each piece of second request information; and the processing unit 1102 is further configured to perform step 9: repeating step 7 by using each piece of third request information as each piece of second request information.

Optionally, the processing unit 1102 is further configured to perform step 11: obtaining, based on the second agent and a second preset instruction, fourth request information corresponding to the first request information, the second preset instruction being used to improve complexity of the first request information; and the processing unit 1102 is further configured to perform step 11: performing step 2 to step 5 and step 10 by using the fourth request information as the first request information until a preset condition is met, the preset condition including at least one of the following: a quantity of times of repetition meets a second preset threshold, a quantity of pieces of request information meets a third preset threshold, and evaluation information obtained after the repetition meets a preset requirement.

Optionally, the processing unit is specifically configured to train the neural network based on the first request information, the second response information, and the evaluation information.

Optionally, the first agent, the second agent, and the neural network are a same neural network or different neural networks.

Optionally, the data processing device includes the first agent, the second agent, and the neural network.

In this embodiment, operations performed by the units in the data processing device are similar to the descriptions of the data processing device in the embodiments shown in FIG. 1 to FIG. 10, and details are not described herein again.

In this embodiment, on one hand, a plurality of agents perform interactive dialogues with reference to an approach of "drawing inferences from one instance" and "deliberately practicing" in a human learning and thinking process. In addition, comprehensive and high-quality training data may be constructed, for self-training, from a horizontal (generalization to increase robustness) dimension and a vertical (progressively learning the complex request) dimension in combination with a self-improvement approach. Furthermore, an optimized neural network may generate higher-quality data to implement iterative evolution.

Refer to FIG. 12, another schematic structural diagram of a data processing device 1200 according to this application. The data processing device 1200 includes a logic circuit 1201 and an input/output interface 1202. The data processing device 1200 may be a chip or an integrated circuit.

The transceiver unit 1101 shown in FIG. 11 may be a communication interface. The communication interface may be the input/output interface 1202 in FIG. 12, and the input/output interface 1102 may include an input interface and an output interface. Alternatively, the communication interface may be a transceiver circuit, and the transceiver circuit may include an input interface circuit and an output interface circuit. The processing unit 1102 shown in FIG. 11 may be the logic circuit 1201 in FIG. 12.

Optionally, the logic circuit 1201 is configured to: obtain first response information of first request information, obtain evaluation information of the first response information, optimize the first response information based on the evaluation information, and train a neural network based on the first request information and second response information. The input/output interface 1202 is configured to obtain the first request information.

The logic circuit 1201 and the input/output interface 1202 may alternatively perform another step performed by the data processing device in any embodiment, and achieve corresponding beneficial effects. Details are not described herein again.

Optionally, the logic circuit 1201 may be a processing apparatus, and some or all functions of the processing apparatus may be implemented by software. Some or all functions of the processing apparatus may be implemented through software.

Optionally, the processing apparatus may include a memory and a processor. The memory is configured to store a computer program, and the processor reads and executes the computer program stored in the memory, to perform corresponding processing and/or steps in any method embodiment.

Optionally, the processing apparatus may include only the processor. The memory configured to store the computer program is located outside the processing apparatus, and the processor is connected to the memory through a circuit/wire, to read and execute the computer program stored in the memory. The memory and the processor may be integrated together, or may be physically independent of each other.

Optionally, the processing apparatus may be one or more chips, or one or more integrated circuits. For example, the processing apparatus may be one or more field-programmable gate arrays (field-programmable gate array, FPGA), an application specific integrated chip (application specific integrated circuit, ASIC), a system on chip (system on chip, SoC), a central processing unit (central processor unit, CPU), a network processor (network processor, NP), a digital signal processing circuit (digital signal processor, DSP), a microcontroller unit (microcontroller unit, MCU), a programmable controller (programmable logic device, PLD), or another integrated chip, or any combination of the foregoing chips or processors.

Refer to FIG. 13, which shows a data processing device 1300 in the foregoing embodiment according to embodiments of this application. The data processing device 1300 may be specifically the data processing device in the foregoing embodiment.

In a diagram of a possible logical structure of the data processing device 1300, the data processing device 1300 may include but is not limited to at least one processor 1301 and a communication port 1302.

The transceiver unit 1101 shown in FIG. 11 may be a communication interface, and the communication interface may be the communication port 1302 in FIG. 13. The communication port 1302 may include an input interface and an output interface. Alternatively, the communication port 1302 may be a transceiver circuit, and the transceiver circuit may include an input interface circuit and an output interface circuit.

It may be understood that, the communication port 1302 in FIG. 13 may be configured to obtain request information.

Further, optionally, the apparatus may include at least one of a memory 1303 and a bus. In this embodiment of this application, the at least one processor 1301 is configured to control and process an action of the data processing device 1300.

In addition, the processor 1301 may be a central processor unit, a general-purpose processor, a digital signal processor, an application specific integrated circuit, a field-programmable gate array or another programmable logic device, a transistor logic device, a hardware component, or any combination thereof. The processor may implement or execute various example logical blocks, modules, and circuits described with reference to content disclosed in this application. Alternatively, the processor may be a combination implementing a computing function, for example, a combination including one or more microprocessors, or a combination of a digital signal processor and a microprocessor. It may be clearly understood by a person skilled in the art that, for the purpose of convenient and brief description, for a detailed working process of the foregoing system, apparatus, and unit, refer to a corresponding process in the foregoing method embodiments, and details are not described herein again.

It should be noted that, the data processing device 1300 shown in FIG. 13 may be specifically configured to implement steps implemented by the data processing device in the foregoing method embodiments, and implement technical effects corresponding to the data processing device. For a specific implementation of the data processing device shown in FIG. 13, refer to the descriptions in the foregoing method embodiment. Details are not described herein again.

In the several embodiments provided in this application, it should be understood that the disclosed system, apparatus, and method may be implemented in other manners. For example, the apparatus embodiments described above are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit. All or some of the integrated units may be implemented by software, hardware, firmware, or any combination thereof.

When software is used to implement the integrated units, all or some of the integrated units may be implemented in a form of a computer program product. The computer program product includes one or more computer instructions. When the computer program instructions are loaded and executed on a computer, the procedure or functions according to embodiments of the present invention are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state drive (solid state drive, SSD)), or the like.

In the specification, claims, and accompanying drawings of this application, the terms "first", "second", and so on are intended to distinguish between similar objects but do not necessarily indicate a specific order or sequence. It should be understood that the terms used in such a way are interchangeable in proper circumstances, which is merely a discrimination manner that is used when objects having a same attribute are described in embodiments of this application. In addition, the terms "include", "have", and any other variants thereof mean to cover the non-exclusive inclusion, so that a process, method, system, product, or device that includes a series of units is not necessarily limited to those units, but may include other units not expressly listed or inherent to such a process, method, system, product, or device.

## Claims

1. A data processing method, wherein the method comprises:
step 1: obtaining first request information;
step 2: obtaining, based on a first agent, first response information corresponding to the first request information;
step 3: obtaining evaluation information of the first response information based on a second agent;
step 4: optimizing the first response information based on the first agent and the evaluation information to obtain second response information; and
step 5: training a neural network based on the first request information and the second response information.

2. The method according to claim 1, wherein the method further comprises:
step 6: obtaining, based on the second agent, a plurality of pieces of second request information corresponding to the first request information, similarity between each piece of second request information in the plurality of pieces of second request information and the first request information being greater than or equal to a first preset threshold; and
step 7: repeating step 2 to step 6 by using each piece of second request information as the first request information until a preset condition is met, the preset condition comprising at least one of the following: a quantity of times of repetition meets a second preset threshold, a quantity of pieces of request information meets a third preset threshold, and evaluation information obtained after the repetition meets a preset requirement.

3. The method according to claim 2, wherein the method further comprises:
step 8: obtaining, based on the second agent and a first preset instruction, a plurality of pieces of third request information corresponding to the plurality of pieces of second request information, the first preset instruction being used to improve complexity of each piece of second request information; and
step 9: repeating step 7 by using each piece of third request information as each piece of second request information.

4. The method according to claim 1, wherein the method further comprises:
step 10: obtaining, based on the second agent and a second preset instruction, fourth request information corresponding to the first request information, the second preset instruction being used to improve complexity of the first request information; and
step 11: performing step 2 to step 5 and step 10 by using the fourth request information as the first request information until a preset condition is met, the preset condition comprising at least one of the following: a quantity of times of repetition meets a second preset threshold, a quantity of pieces of request information meets a third preset threshold, and evaluation information obtained after the repetition meets a preset requirement.

5. The method according to any one of claims 1 to 4, wherein the training the neural network based on the first request information and the second response information comprises:
training the neural network based on the first request information, the second response information, and the evaluation information.

6. The method according to any one of claims 1 to 5, wherein the first agent, the second agent, and the neural network are a same neural network or different neural networks.

7. The method according to any one of claims 1 to 6, wherein the first agent, the second agent, and the neural network are located in a same compute device or different compute devices.

8. A data processing device, wherein the data processing device comprises a transceiver unit and a processing unit:
the transceiver unit is configured to perform step 1: obtaining first request information;
the processing unit is configured to perform step 2: obtaining, based on a first agent, first response information corresponding to the first request information;
the processing unit is further configured to perform step 3: obtaining evaluation information of the first response information based on a second agent;
the processing unit is further configured to perform step 4: optimizing the first response information based on the first agent and the evaluation information to obtain second response information; and
the processing unit is further configured to perform step 5: training a neural network based on the first request information and the second response information.

9. The data processing device according to claim 8, wherein
the processing unit is further configured to perform step 6: obtaining, based on the second agent, a plurality of pieces of second request information corresponding to the first request information, similarity between each piece of second request information in the plurality of pieces of second request information and the first request information being greater than or equal to a first preset threshold; and
the processing unit is further configured to perform step 7: repeating step 2 to step 6 by using each piece of second request information as the first request information until a preset condition is met, the preset condition comprising at least one of the following: a quantity of times of repetition meets a second preset threshold, a quantity of pieces of request information meets a third preset threshold, and evaluation information obtained after the repetition meets a preset requirement.

10. The data processing device according to claim 9, wherein
the processing unit is further configured to perform step 8: obtaining, based on the second agent and a first preset instruction, a plurality of pieces of third request information corresponding to the plurality of pieces of second request information, the first preset instruction being used to improve complexity of each piece of second request information; and
the processing unit is further configured to perform step 9: repeating step 7 by using each piece of third request information as each piece of second request information.

11. The data processing device according to claim 8, wherein
the processing unit is further configured to perform step 10: obtaining, based on the second agent and a second preset instruction, fourth request information corresponding to the first request information, the second preset instruction being used to improve complexity of the first request information; and
the processing unit is further configured to perform step 11: performing step 2 to step 5 and step 10 by using the fourth request information as the first request information until a preset condition is met, the preset condition comprising at least one of the following: a quantity of times of repetition meets a second preset threshold, a quantity of pieces of request information meets a third preset threshold, and evaluation information obtained after the repetition meets a preset requirement.

12. The data processing device according to any one of claims 8 to 11, wherein the processing unit is specifically configured to train the neural network based on the first request information, the second response information, and the evaluation information.

13. The data processing device according to any one of claims 8 to 12, wherein the first agent, the second agent, and the neural network are a same neural network or different neural networks.

14. The data processing device according to any one of claims 8 to 13, wherein the data processing device comprises the first agent, the second agent, and the neural network.

15. A data processing device, comprising: a processor, wherein the processor is coupled to a memory, the memory is configured to store a program or instructions, and when the program or the instructions are executed by the processor, the data processing device is enabled to perform the method according to any one of claims 1 to 7.

16. The data processing device according to claim 15, wherein the data processing device is a chip.

17. A communication system, wherein the communication system comprises a first agent and a second agent;
the first agent is configured to obtain first response information of first request information;
the second agent is configured to evaluate the first response information to obtain evaluation information;
the first agent is further configured to optimize the first response information based on the evaluation information to obtain second response information; and the first request information and the second response information are used to train a neural network.

18. The communication system according to claim 17, wherein the communication system further comprises the neural network.

19. A computer storage medium, comprising computer instructions, wherein when the computer instructions are run on a terminal device, the terminal device is enabled to perform the method according to any one of claims 1 to 7.

20. A computer program product, wherein when the computer program product runs on a computer, the computer is enabled to perform the method according to any one of claims 1 to 7.
